# EUROPEAN PATENT SPECIFICATION

(11) **EP 1 113 698 B1**
(45) Date of publication and mention of the grant of the patent: **22.10.2008**
(21) Application number: 00311717.3
(22) Date of filing: 27.12.2000
(51) Int. Cl.: H04Q 11/04

(54) **Packet header structure and method of controlling packet transfer**
Paketkopfstruktur und Verfahren zur Steuerung der Paketübertragung
Structure d'en-tête de paquet et méthode pour la commande de transfert de paquets

(30) Priority: 28.12.1999 JP 37580199
(43) Date of publication of application: 04.07.2001
(73) Proprietor: NTT DoCoMo, Inc., Tokyo 100-6150 (JP)
(72) Inventor: Okajima, Ichiro, Yokohama-shi,Kanagawa 236-0032 (JP); Umeda, Narumi, Yokohama-shi,Kanagawa 236-0032 (JP)
(74) Representative: Luckhurst, Anthony Henry William

(56) References cited:
- WO-A-96/31020
- WO-A-99/33305

## Description

### BACKGROUND OF THE INVENTION

### 1. Field of the Invention

The present invention generally relates to a method of controlling packet transfer in packet mobile communication systems, and particularly relates to a method of transferring packets used when packets destined for mobile terminals are transmitted to a packet communication network comprised of mobile terminals and routers inclusive of routers capable of wireless communication.

Further, the present invention relates to a header structure of a packet that is transferred through a packet communication network according to the method of controlling packet transfer.

### 2. Description of the Related Art

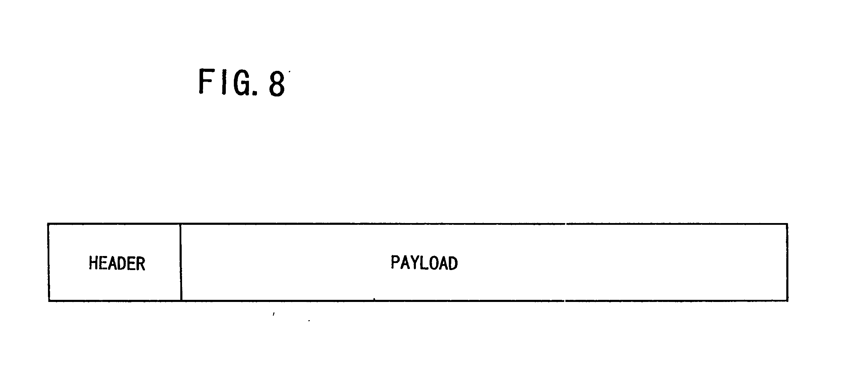

Packets transferred through a packet communication network comprised of a plurality of routers generally have a structure as shown in Fig.8, and includes a header portion and a payload portion. The payload portion includes data to be transferred to terminals via the packet communication network. The header portion includes a source address (e.g., source IP address) indicative of a terminal that transmits the packet, and includes a destination address (e.g., destination IP address) indicative of a terminal that receives the packet. The header portion further contains control information necessary for packet transfer.

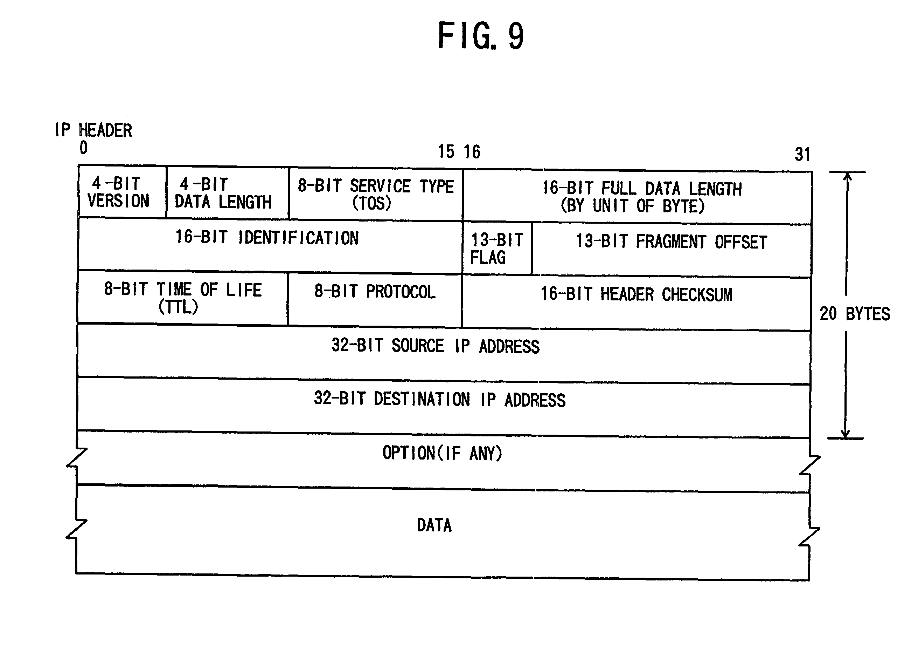

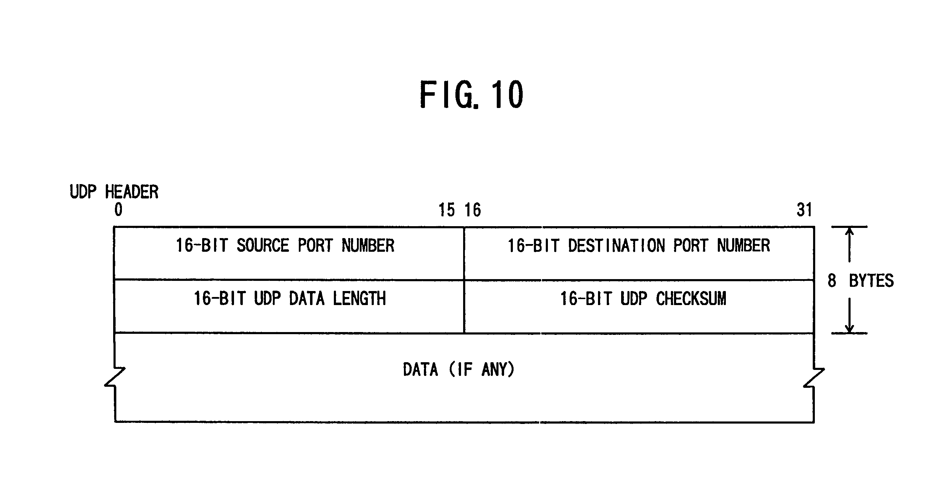

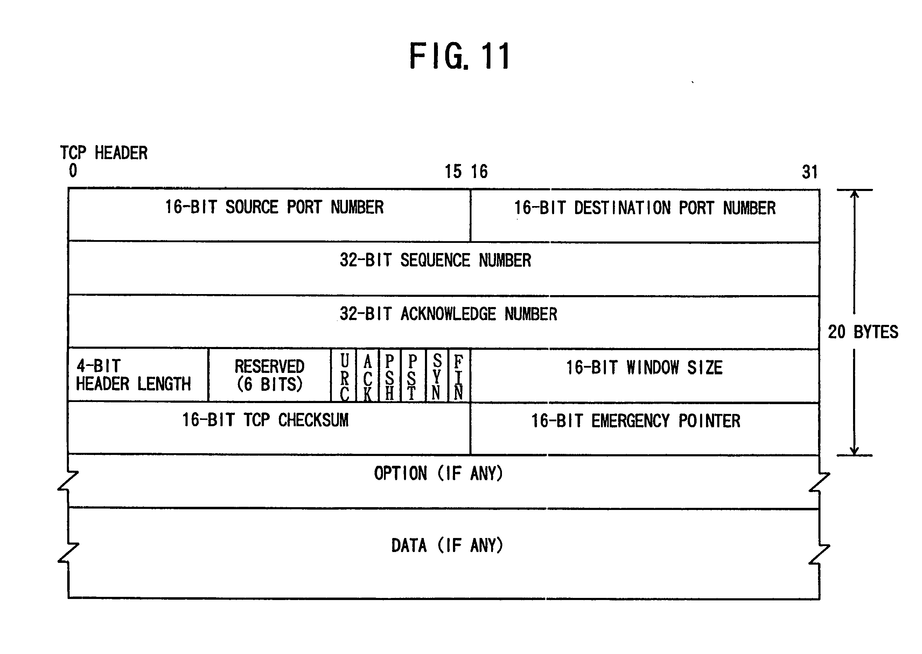

In the case of IP (Internet Protocol) packets, the header portion has a further detailed structure that is defined as shown in Fig.9, Fig.10, and Fig.11, which illustrate an IP header, a UDP header, and a TCP header, respectively. Either the UDP header or the TCP header is contained inside the IP header.

When such a packet is transmitted from a source terminal to a packet communication network, routers transfer the packet to other routers by checking the information contained in the header portion according to a predetermined transfer algorithm. This makes it possible to transfer the packet successively from router to router. When the packet arrives at a router that is connected to the destination terminal specified by the destination address, the router transfers the packet to the destination terminal.

It is conceivable to devise a system that transmits a packet to a mobile terminal by utilizing the packet communication network as described above. The packet that is to be transferred through the packet communication network will have a header portion thereof including a source address indicative of a source terminal and a destination address indicative of a destination mobile terminal. In this case, the information that indicates the destination mobile terminal is an address that is unique in the packet communication network.

In the system in which packets are transferred to mobile terminals based on the packet communication network as described above, various services may be provided depending on the conditions of the mobile terminals. For example, mobile stations that are moving at high speed, and no other mobile stations, may be provided with some information via packets. In such a case, speeds at which mobile stations are moving are centrally kept track of in the packet communication network. A service provider inquires of the network center about destination addresses (which are unique in the packet communication network) of the mobile terminals that are moving faster than a predetermined speed. The service provider then transmits packets to the packet communication network after including the destination addresses in the header portion of the packets.

When address information indicative of all mobile terminals is included in the header portion of a packet, such a packet is broadcast from the service provider to the packet communication network. In this case, mobile terminals receiving the broadcast packet check whether the received packet is relevant to their own current statuses.

In the case where services conforming to respective conditions of mobile stations are provided to the mobile terminals via a packet communication network, the former scheme described above requires constant communication between the network center and the service provider as the network center tracks the conditions of mobile terminals (e.g., moving speed), with an aim of identifying destination addresses. Such requirements result in the heavy processing load as well as increasing communication traffic in the packet communication network.

The latter scheme described above requires transmission of a packet to all the routers that are equipped with wireless communication functions. This results in excessive packet transfer.

Accordingly, there is a first need for a packet header structure that makes it possible to transfer a packet to mobile terminals by use of a simpler scheme when services conforming to the conditions of mobile terminals are to be rendered to mobile terminals via a packet communication network.

Further, there is a second need for a method of controlling packet transfer that can readily transfer a packet having such a header structure to mobile terminals.

The invention provides a header structure and a packet transfer controlling method as defined in Claims 1 and 7.

The present invention can provide a scheme that substantially obviates one or more of the problems caused by the limitations and disadvantages of the related art.

When a packet having this header structure is transmitted to the packet communication network, the packet can be transferred through the packet communication network by using the information about the conditions of mobile terminals as an indication of destination. Therefore, there is no need to identify an address that is unique in the packet communication network from the information about the conditions of mobile terminals so as to transfer the packet to the identified address.

The information about the conditions of mobile terminals is the conditions of mobile terminal themselves such as conditions of movement (speed, acceleration, moving direction, etc.) of the mobile terminals, or conditions of environment surrounding the mobile terminals such as temperature, humidity, altitude, etc.

As an example in which services are provided in accordance with the conditions of movement of mobile stations according to the present invention, the header structure as described above may be such that the information specifies conditions of movement of the destination mobile terminals.

The information about the conditions of movement of mobile terminals described above may specify speed of the destination mobile terminals.

Use of the packet having the header structure as described above makes it easier to render services through a packet communication network such as delivering predetermined information to mobile terminals moving at high speed, for example.

The speed of mobile terminals described above may be specified as a single speed.

The speed of mobile terminals described above may be specified as a plurality of speeds.

When a packet having the header structure as described above is transmitted to the packet communication network, the packet can be transferred to mobile terminals moving at speed equal to any one of the specified speeds.

Further, the speed about the mobile terminals is specified as a range of speed.

When a packet having the header structure as described above is transmitted to the packet communication network, the packet can be transferred to mobile terminals moving at speed within the specified speed range.

According to the method of packet transfer, a packet including information about the conditions of mobile terminals stored in the header portion is successively transferred according to a predetermined transfer algorithm to reach a communication router that can communicate with mobile terminals. This communication router transmits the packet to mobile terminals if the information about the conditions of mobile terminals recorded in the communication router matches the information about the conditions of mobile terminals stored as the destination information in the packet header.

According to the method of packet transfer as described above, distributed control of the information about the conditions of mobile terminals at each of the communication routers suffices to provide mobile terminals with services that conform to the conditions of mobile terminals.

Other objects and further features of the present invention will be apparent from the following detailed description when read in conjunction with the accompanying drawings.

### BRIEF DESCRIPTION OF THE DRAWINGS

Fig.1 is an illustrative drawing showing a basic configuration of a packet communication network in which packets are transferred by a method of controlling packet transfer according to an embodiment of the present invention;
Fig.2 is a drawing showing an example of a speed-management table stored in routers having wireless communication functions;
Fig.3 is a drawing showing a header structure of a packet according to an embodiment of the present invention;
Fig.4 is a drawing showing an example of how speed information is specified in a packet header;
Fig.5 is an illustrative drawing showing an example of the way packets are transferred through the packet communication network;
Fig.6 is an illustrative drawing showing an example of the way packets are transferred through the packet communication network;
Fig.7 is an illustrative drawing showing an example of the way packets are transferred through the packet communication network;
Fig.8 is a drawing showing an example of packet structure;
Fig.9 is a drawing showing a format of an IP header;
Fig.10 is a drawing showing a format of a UDP header;
Fig.11 is a drawing showing a format of a TCP header; and
Fig.12 is a drawing showing an example of history information.

### DESCRIPTION OF THE PREFERRED EMBODIMENTS

In the following, embodiments of the present invention will be described with reference to the accompanying drawings.

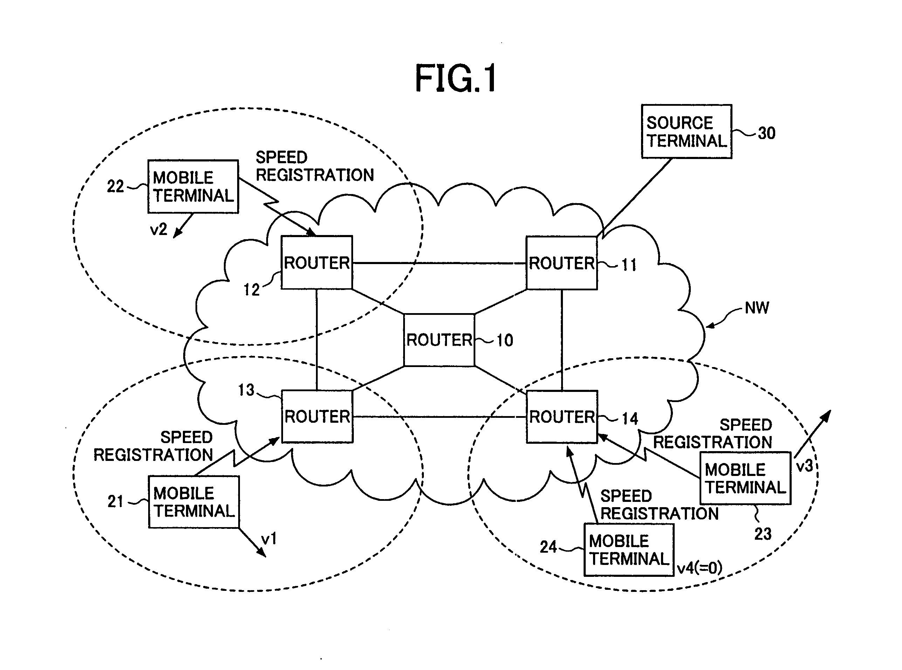

Fig.1 is an illustrative drawing showing a packet communication network which transfer packets according to a method of packet transfer according to an embodiment of the present invention. In Fig.1, for the sake of simplicity of explanation, only main routers are shown among other routers included in the packet communication network.

In Fig.1, the packet communication network is comprised of a plurality of routers 11, 12, 13, and 14. The router 11 is connected to a source terminal 30, which may be stationary or may be mobile. The routers 12, 13, and 14 are communication routers (e.g., base stations) equipped with wireless communication functions to communicate with mobile terminals. The router 10 has no connection with outside the network, and is only provided with a function to transfer packets. In the packet communication network NW, the routers 10, 11, 12, 13, and 14 are connected through a network.

Mobile terminals 21, 22, 23, and 24 measure their own moving speeds. The moving speeds can be estimated from phasing pitch, or can be obtained from changes of latitude and longitude derived from GPS or intervals at which radio zones (cells) are switched. The mobile terminals 21, 22, 23, and 24 periodically transmit respective moving speeds v1, v2, v3, and v4 to a communication router that is located in the current radio zone in which they are positioned at present.

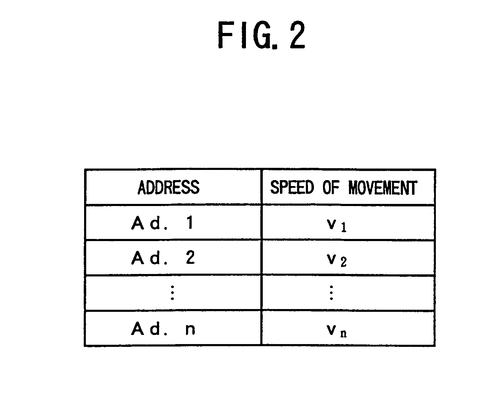

The routers 12, 13, and 14 equipped with wireless communication functions receive the moving speeds transmitted from the relevant mobile stations, and manages and controls correspondences between the moving speeds and addresses indicative of the mobile terminals. The management and control of correspondences is carried out by providing and updating a speed-management table showing relations between the moving speeds and the addresses as shown in Fig.2.

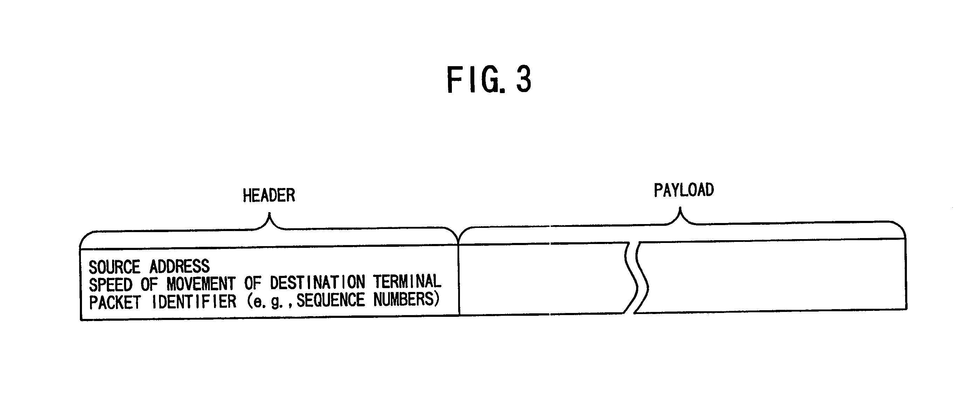

Fig.3 is an illustrative drawing showing a structure of a packet that is transmitted from the source terminal 30 to the packet communication network NW.

In Fig.3, the packet includes a header portion and a payload portion. The header portion includes a source address, destination information, a packet identifier, and other control information, and the payload portion contains therein the contents of information to be transmitted. The destination information of the packet may be information about the moving speed of the destination mobile terminal. The information about moving speed used as the destination information is specified as follows.

For example, the information about moving speed may be specified by a single speed v. In this case, packets are generated and transmitted to mobile stations that move at the single speed v.

Alternatively, the information about moving speed may be specified by a plurality of speeds v1, v2, ..., vn. In this case, packets are generated and transmitted to mobile stations that move at any one of the speeds v1, v2, ..., vn.

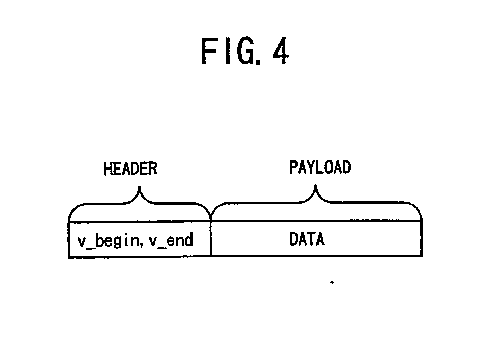

Alternatively, as shown in Fig.4, the information about moving speed may be specified by a range of speeds (v_begin, v_end). In this case, packets are generated and transmitted to mobile stations that move at speed within this speed range (v_begin, v_end). In Fig.4, the header portion contains therein only a speed range as the destination information. Other information such as the source address and the packet identifier (sequence number) is omitted.

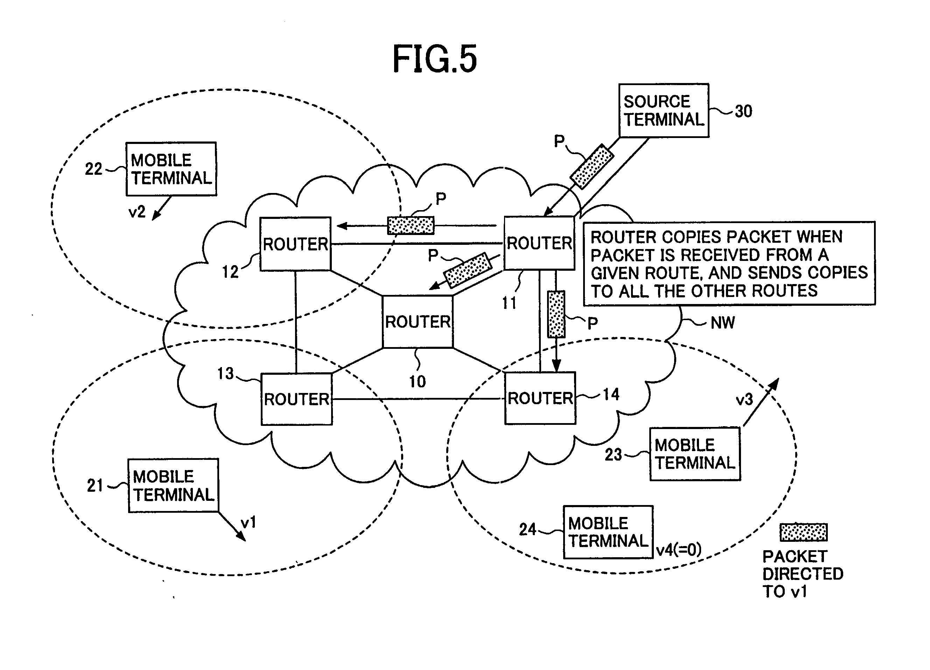

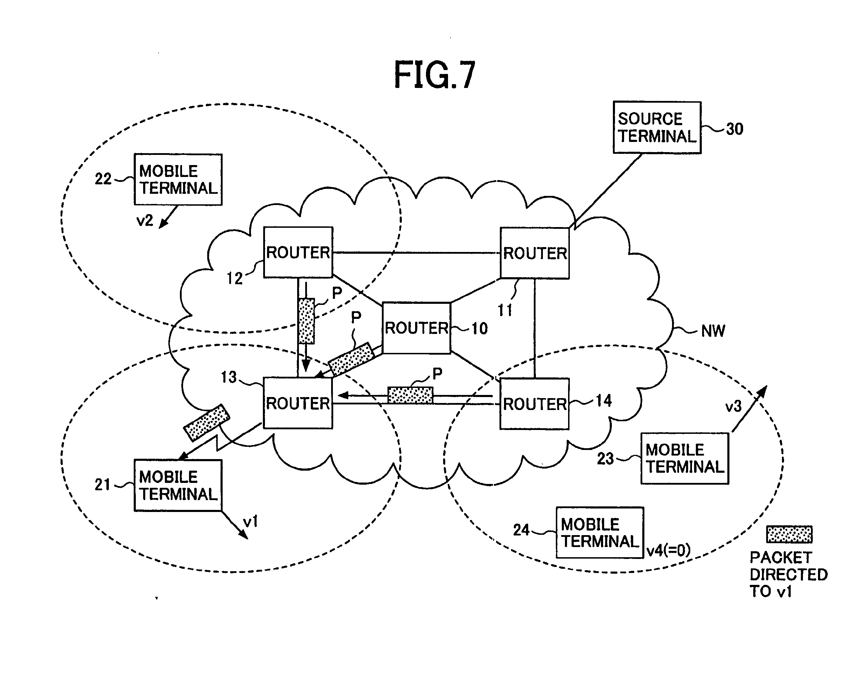

Transfer of a packet p inside the packet communication network NW will be described with reference to Fig.5 through Fig.7 by referring to a case in which the source terminal 30 transmits the packet p that specifies the destination information by the information about moving speed indicated as a single speed vl.

The routers 10, 11, 12, 13, and 14 provided in the packet communication network transfer the packet p according to a known transfer algorithm such as FLOODING.

As shown in Fig.5, when the source terminal 30 transmits the packet p to the router 11, the router 11 makes copies of the received packet p, and transfers the copies of the packet p to all the routes other than the route from which the packet p was received. Namely, the copies of the packet p are transmitted to the routers 12, 10, and 14. Each of these routers makes copies of the received packet p, and transmits the copies of the packet p to all the routes other that the route through which the packet p was received. According to this transfer algorithm, the packets p are successively transferred through the packet communication network NW.

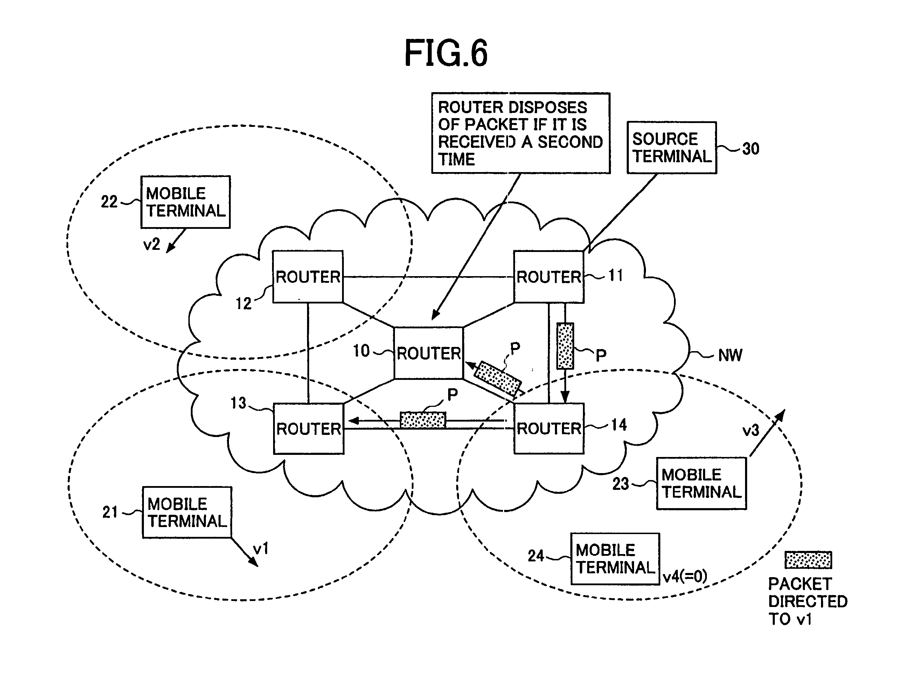

Each of the routers 10, 11, 12, 13, and 14 keeps history of the transferred packets. As shown in Fig.6, each router refers to the history each time a packet is received, and checks whether the received packet had been received before. If it is ascertained that the received packet was received before, the router disposes of the received packet. In this manner, excessive packet transfer can be avoided.

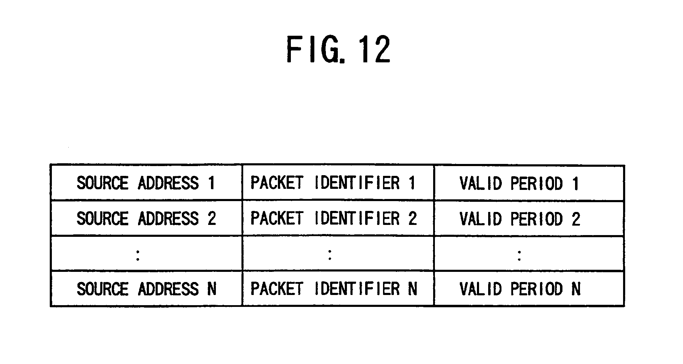

As shown in Fig.12, the contents of history include a source address, a packet identifier (sequence number or the like), and a valid period, all of which together form a record. Each of the routers 10, 11, 12, 13, and 14 checks whether the source address and the packet identifier of a received packet are recorded in the history, and discards the packet as a packet received before if the history contains such record. If the history does not contain such record, it is ascertained that the received packet is a packet that is newly received, and a new record is added to the history by indicating the source address, the packet identifier, and the valid period of the received packet. The valid period is set to a value that is obtained by adding a value indicative of a predetermined time period to a value indicative of the present time. The predetermined time period is determined based on the maximum time period during which the packet may exist within the network.

The router 10, 11, 12, 13, and 14 purge history with respect to a record that has an expired valid period. This prevents unnecessary packet transfer, and suppresses an undue increase in history volume.

Upon receiving a packet p, each of the routers 12, 13, and 14 equipped with the wireless communication function refers to the speed-management table (see Fig.2), and compares moving speed of relevant mobile terminals with the speed v1 stored as the destination information in the header portion of the received packet p where the relevant mobile terminals are those controlled by the respective relevant routers. If the moving speed of the relevant mobile terminals do not match the speed vl stored in the header portion of the packet p, copies of the packet p are transferred to other routers according to the transfer algorithm as described above.

For example, the mobile terminal 22 controlled by the router 12 is moving at speed v2, and the mobile terminals 23 and 24 controlled by the router 14 are moving at respective speeds v3 and v4 (, which is zero indicative of no movement). As a result, the routers 12 and 14 make and transfer copies of the packet p.

If the moving speed of the relevant mobile terminals match the speed v1 stored as the destination information in the header portion of the received packet p, a router transmits a packet p via radio to the mobile terminals moving at this specified speed, and, also, transmits copies of the packet to other routers according to the transfer algorithm described above. For example, the router 13 retrieves an address corresponding to the speed v1 from the speed-management table as the speed v1 is specified in the header portion of the received packet p, and transmits the received packet p to the mobile terminal 21 corresponding to the retrieved address.

When transmitting the received packet p to the mobile terminal 21, the router 13 disposes of another one of the packet p after referring to the history if the identical packet p is received from another route.

In this manner, the packet p transmitted from the source terminal 30 to the packet communication network NW is successively transferred through routers as each of the routers checks the speed v1 specified in the header portion as the indication of destination, and the router 13 connected to the mobile terminal 21 moving at the speed v1 delivers the packet p to the relevant mobile terminal 21.

As described above, information about speed is stored in the header portion as the indication of destination, so that the packet can travel through the packet communication network NW according to a conventional transfer algorithm to reach a router connected to a mobile terminal moving at the specified speed. A router equipped with wireless communication functions keeps track of the moving speed of relevant mobile terminals that are under the control of the router. Because of this, a relevant router can deliver the packet to a mobile terminal moving at the specified speed.

It should be noted that the contents to be delivered to the mobile terminals satisfying the speed requirements are contained in the payload.

In this manner, services conforming to the speed of mobile terminals are provided. For example, an alarm may be delivered to mobile terminals moving faster than a speed limit.

Since the header portion of the packet stores data of speed as the destination information, all that a given router equipped with the wireless communication function has to do is to keep track of the moving speed of relevant mobile terminals that are controlled by this router. Namely, distributed control as opposed to central control suffices to deliver a packet to the mobile terminals moving at the specified speed. Concentration of control and processing can be avoided, thereby reducing the load relating to processing and management in the system.

Although the above embodiment has been described with reference to FLOODING as an example of a packet transfer algorithm, a packet transfer algorithm is not limited to this example. For example, RPB (reverse-path broadcasting), TRPB (truncated RPB), Reverse-Path Multicasting, or the like can be used as the transfer algorithm.

Further, although the above embodiment has been described with reference to a case in which the moving speed of mobile terminals is specified as the destination information in the packet header portion, the destination information specified in the header is not limited to this example. For example, the destination information may be other conditions of mobile terminals such as a moving direction, an acceleration, or the like, may be conditions of environment surrounding mobile terminals such as temperature, humidity, altitude, etc., or may be information about service contents, etc. Namely, the destination information can be any information useful for selecting a service to be rendered to mobile terminals.

As described above, according to the present invention, information about conditions of destination mobile terminals is specified as destination information in a packet header, so that the packet can be transferred through the packet communication network by using the information about conditions of mobile terminals as the indication of destination. This makes it possible to provide services conforming to the conditions of mobile terminals or to deliver information corresponding to the services by using packets.

Further, according to the present invention, a router equipped with the wireless communication function manages and controls information about the conditions of mobile terminals that are controlled by this router, so that distributed control by respective routers make it possible to transfer the packet having the above-described header structure to a destination mobile terminal. Accordingly, there is no need for central control and processing based on correspondences between the conditions of mobile terminals and addresses of mobile terminals that are unique in the packet communication network. This makes it easier to transfer a packet to a destination terminal.

Further, the present invention is not limited to these embodiments, but various variations and modifications may be made without departing from the scope of the present invention.

## Claims

1. A header structure of a packet, which is transferred to a mobile terminal through a packet communication network that includes a plurality of routers inclusive of communication routers configured to communicate with mobile terminals through radio, comprising information about conditions of destination mobile terminals for which said packet is destined, said information serving as indication of destination, and said information being conditions of movement of the destination mobile terminals or conditions of environment surrounding the destination mobile terminals.

2. The header structure as claimed in Claim 1, wherein said information specifies conditions of movement of the destination mobile terminals.

3. The header structure as claimed in Claim 2, wherein said information specifies speed of the destination mobile terminals.

4. The header structure as claimed in Claim 3, wherein said speed is specified as a single speed.

5. The header structure as claimed in Claim 3, wherein said speed is specified as a plurality of speeds.

6. The header structure as claimed in Claim 3, wherein said speed is specified as a range of speed.

7. A method of controlling packet transfer when packets are transferred to mobile terminals through a packet communication network that includes a plurality of routers inclusive of communication routers configured to communicate with mobile terminals through radio, comprising the steps of:
making any given one of the communication routers keep track of information about conditions of mobile terminals that can communicate with and send said information to said any given one of the communication routers;
making each of the routers transfer a packet to other routers after checking destination information when the packet, travelling through the packet communication network, includes information about the conditions of mobile terminals stored as the destination information in a header portion thereof;
and making the communication routers transfer the packet through radio to mobile stations that can communicate with the communication routers if the information about the conditions of mobile terminals stored as the destination information in the header portion of the packet matches the information about the conditions of mobile terminals kept track of by the communication routers;
said information about the conditions of mobile terminals being conditions of movement of the destination mobile terminals or conditions of environment surrounding the destination mobile terminals.

8. The method of controlling packet transfer as claimed in Claim 7, wherein the information about the conditions of mobile terminals kept track of by the communication routers and the information about the conditions of mobile terminals stored as the destination information in the header portion of the packet are information about movement of mobile terminals.

9. The method of controlling packet transfer as claimed in Claim 8, wherein the information about movement of mobile terminals specifies speed of mobile terminals.

10. The header structure as claimed in claim 9, wherein said speed is specified as a single speed.

11. The header structure as claimed in claim 9, wherein said speed is specified as a plurality of speeds.

12. The header structure as claimed in claim 9, wherein said speed is specified as a range of speed.

## Patentansprüche

1. Kopfstruktur eines Pakets, welches zu einem mobilen Endgerät über ein Paketkommunikationsnetzwerk übertragen wird, welches mehrere Router aufweist, einschließlich Kommunikationsrouter, die konfiguriert sind, mit mobilen Endgeräten über Funk zu kommunizieren, welche Information über Zustände mobiler Bestimmungsendgeräte umfassen, für die das Paket bestimmt ist, wobei die Information als Anzeige des Bestimmungsorts dient, und wobei die Information Bewegungszustände mobiler Bestimmungsendgeräte oder Zustände der Umgebung, welche die mobilen Bestimmungsendgeräte umgibt, ist.

2. Kopfstruktur nach Anspruch 1, wobei die Information Bewegungszustände der mobilen Bestimmungsendgeräte spezifiziert.

3. Kopfstruktur nach Anspruch 2, wobei die Information eine Geschwindigkeit der mobilen Bestimmungsendgeräte spezifiziert.

4. Kopfstruktur nach Anspruch 3, wobei die Geschwindigkeit als eine Einzelgeschwindigkeit spezifiziert wird.

5. Kopfstruktur nach Anspruch 3, wobei die Geschwindigkeit als mehrere Geschwindigkeiten spezifiziert wird.

6. Kopfstruktur nach Anspruch 3, wobei die Geschwindigkeit als Geschwindigkeitsbereich spezifiziert wird.

7. Verfahren zum Steuern einer Paketübertragung, wenn Pakete zu mobilen Endgeräten über ein Paketkommunikationsnetzwerk übertragen werden, welches mehrere Router aufweist einschließlich Kommunikationsrouter, die konfiguriert sind, mit mobilen Endgeräten über Funk zu kommunizieren, welches folgende Schritte aufweist:
Veranlassen, dass ein bestimmter der Kommunikationsrouter Information über Zustände mobiler Endgeräte verfolgt, mit denen kommuniziert werden kann, und die Information zu irgendeinem der Kommunikationsrouter gesendet wird;
Bestimmen, dass jeder der Router ein Paket zu anderen Routern nach Prüfen einer Bestimmungsortinformation übertragen wird, wenn das Paket, welches durch das Paketkommunikationsnetzwerk läuft, Information über die Zustände mobiler Endgeräte aufweist, welche als Bestimmungsortinformation in deren Kopfbereich gespeichert sind;
und Bestimmen, dass die Kommunikationsrouter das Paket über Funk zu Mobilstationen überträgt, welche mit den Kommunikationsroutern kommunizieren können, wenn die Information über die Zustände mobiler Endgeräte, welche als Bestimmungsortinformation im Kopfbereich des Pakets gespeichert sind, mit der Information über die Zustände der mobilen Endgeräte übereinstimmt, welche durch die Kommunikationsrouter verfolgt werden;
wobei die Information über die Zustände mobiler Endgeräte, welche Bewegungszustände der mobilen Bestimmungsendgeräte oder Zustände der Umgebung, welche die mobilen Bestimmungsendgeräte umgibt, ist.

8. Verfahren zum Steuern der Paketübertragung nach Anspruch 7, wobei die Information über die Zustände mobiler Endgeräte, welche durch die Kommunikationsrouter verfolgt werden, und die Information über die Zustände mobiler Endgeräte, welche als die Bestimmungsortinformation im Kopfbereich des Pakets gespeichert sind, Information über die Bewegung mobiler Endgeräte sind.

9. Verfahren zum Steuern der Paketübertragung nach Anspruch 8, wobei die Information über die Bewegung mobiler Endgeräte die Geschwindigkeit mobiler Endgeräte spezifiziert.

10. Kopfstruktur nach Anspruch 9, wobei die Geschwindigkeit als Einzelgeschwindigkeit spezifiziert wird.

11. Kopfstruktur nach Anspruch 9, wobei die Geschwindigkeit als mehrere Geschwindigkeiten spezifiziert wird.

12. Kopfstruktur nach Anspruch 9, wobei die Geschwindigkeit als Geschwindigkeitsbereich spezifiziert wird.

## Revendications

1. Structure d'en-tête de paquet, lequel est transféré à un terminal mobile à travers un réseau de communication qui comprend une pluralité de routeurs comprenant des routeurs de communication configurés pour communiquer avec des terminaux mobiles par radio, comprenant des informations concernant les conditions des terminaux mobiles de destination auxquels ledit paquet est destiné, lesdites informations servant d'indication de destination, et lesdites informations étant des conditions de mouvement des terminaux mobiles de destination ou des conditions environnementales entourant les terminaux mobiles de destination.

2. Structure d'en-tête telle que revendiquée dans la revendication 1, dans laquelle lesdites informations spécifient des conditions de mouvement des terminaux mobiles de destination.

3. Structure d'en-tête telle que revendiquée dans la revendication 2, dans laquelle lesdites informations spécifient la vitesse des terminaux mobiles de destination.

4. Structure d'en-tête telle que revendiquée dans la revendication 3, dans laquelle ladite vitesse est spécifiée en tant que vitesse unique.

5. Structure d'en-tête telle que revendiquée dans la revendication 3, dans laquelle ladite vitesse est spécifiée en tant que pluralité de vitesses.

6. Structure d'en-tête telle que revendiquée dans la revendication 3, dans laquelle ladite vitesse est spécifiée en tant que plage de vitesses.

7. Procédé de commande de transfert de paquets lorsque des paquets sont transférés vers des terminaux mobiles à travers un réseau de communication de paquets qui comprend une pluralité de routeurs comprenant des routeurs de communication configurés pour communiquer avec des terminaux mobiles par radio, comprenant les étapes consistant à :
faire que n'importe quel routeur donné des routeurs de communication conserve une trace des informations concernant les conditions des terminaux mobiles qui peuvent communiquer avec lui et envoie lesdites informations audit n'importe quel routeur parmi les routeurs de communication ;
faire que chacun des routeurs transfère un paquet vers les autres routeurs après avoir vérifié les informations de destination lorsque le paquet, voyageant à travers le réseau de communication de paquets, comprend des informations concernant les conditions des terminaux mobiles stockées en tant qu'informations de destination dans une partie d'en-tête de celui-ci ;
et faire que les routeurs de communication transfèrent le paquet par radio aux stations mobiles qui peuvent communiquer avec les routeurs de communication si les informations concernant les conditions des terminaux mobiles stockées en tant qu'informations de destination dans la partie d'en-tête du paquet correspondent aux informations concernant les conditions des terminaux mobiles dont la trace a été conservée par les routeurs de communication ;
lesdites informations concernant les conditions des terminaux mobiles étant des conditions de mouvement des terminaux mobiles de destination ou des conditions environnementales entourant les terminaux mobiles de destination.

8. Procédé de commande de transfert de paquets tel que revendiqué dans la revendication 7, dans lequel les informations concernant les conditions des terminaux mobiles dont les traces ont été conservées par les routeurs de communication et les informations concernant les conditions des terminaux mobiles stockées en tant qu'informations de destination dans la partie d'en-tête du paquet sont des informations concernant le mouvement des terminaux mobiles.

9. Procédé de commande de transfert de paquets tel que revendiqué dans la revendication 8, dans lequel les informations concernant le mouvement des terminaux mobiles spécifient la vitesse des terminaux mobiles.

10. Structure d'en-tête telle que revendiquée dans la revendication 9, dans laquelle ladite vitesse est spécifiée en tant que vitesse unique.

11. Structure d'en-tête telle que revendiquée dans la revendication 9, dans laquelle ladite vitesse est spécifiée en tant que pluralité de vitesses.

12. Structure d'en-tête telle que revendiquée dans la revendication 9, dans laquelle ladite vitesse est spécifiée en tant que plage de vitesses.
